# FASCICULE DE BREVET EUROPEEN

(11) **EP 1 448 349 B1**
(45) Date de publication et mention de la délivrance du brevet: **07.01.2009**
(21) Numéro de dépôt: 02793223.5
(22) Date de dépôt: 08.11.2002
(51) Int. Cl.: B29C 43/18

(54) **PROCEDE ET ENSEMBLE POUR SURMOULER PAR COMPRESSION DE MATIERE PLASTIQUE UN ELEMENT TUBULAIRE**
VERFAHREN UND VORRICHTUNG ZUM ÜBERZIEHEN VON ROHRFÖRMIGEN GEGENSTÄNDEN MITTELS EINES KUNSTSTOFF-PRESSFORMVERFAHRENS
METHOD AND ASSEMBLY FOR OVER-MOULDING A TUBULAR ELEMENT BY PLASTIC MATERIAL COMPRESSION

(30) Priorité: 08.11.2001 FR 0114456
(43) Date de publication de la demande: 25.08.2004
(73) Titulaire: Faurecia Interieur Industrie, 92000 Nanterre (FR)
(72) Inventeur: BAUDART, Laurent, C/O Faurecia Intérieur Industrie, 60110 Meru (FR)
(74) Mandataire: Neyret, Daniel Jean Marie
(86) Numéro de dépôt international: PCT/FR2002/003853
(87) Numéro de publication internationale: WO 2003/039831

(56) Documents cités:
- WO-A-01/05570
- WO-A-84/03065
- FR-A- 2 490 951
- US-B1- 6 248 278

## Description

L'invention concerne un procédé et un ensemble pour surmouler par compression de matière plastique un élément au moins en partie tubulaire.

Le surmoulage d'un élément soumet ledit élément à des contraintes très élevées du fait de la pression nécessaire pour obtenir une répartition satisfaisante de la matière dans le moule et de la faible fluidité de la matière plastique. Or, un élément creux, et en particulier tubulaire, résiste difficilement à des contraintes très élevées sans subir une déformation permanente.

Bien qu'il ne soit fait référence qu'à la compression de la matière plastique, l'invention n'est pas limitée à cette seule technique de moulage. Elle concerne également le surmoulage par injection-compression ou toute autre technique de moulage incluant une étape de compression de la matière.

Afin de remédier à ce problème, il est décrit dans WO-A-01 05570 une technique consistant notamment à injecter dans l'élément à surmouler un fluide incompressible. Toutefois, cette solution n'est pas pleinement satisfaisante dans la mesure où il est bien souvent délicat de maintenir ledit fluide à l'endroit désiré, notamment lorsque l'élément à surmouler présente des trous.

Par ailleurs, il est proposé dans WO-A-99 25531 d'introduire de la matière caoutchouteuse dans l'élément à surmouler. Cette solution complique notablement le procédé d'obtention dans la mesure où il faut gérer en outre l'approvisionnement en matière caoutchouteuse et surtout la récupération de cette matière à l'intérieur de l'élément après surmoulage.

Le document US-6 248 278 décrit le surmoulage d'une douille de fixation de crampon dans une semelle de chaussure, avec création d'une pression dans toute la partie creuse de la douille pendant le surmoulage.

Le document DE-195 23 723 décrit la déformation d'un tube mince à une forme ondulée sur un mandrin comprenant des éléments de faible longueur ayant plusieurs configurations.

Le document FR-A-2490951 décrit la fabrication d'une pièce en plastique utilisant un mandrin expansible.

Pour résoudre les problèmes précités, et permettre de surmouler des éléments tubulaires de grande longueur (environ 1 mètre et un rapport longueur/diamètre supérieur à 10), l'invention concerne un procédé selon la revendication 1.

L'usage d'un tel dispositif mécanique permet de supporter une partie des contraintes subies par l'élément à surmouler de façon à lui éviter toute détérioration. Il est utilisable, y compris lorsque l'élément présente des trous radiaux répartis le long de la direction d'allongement. Il ne nécessite pas de gérer des flux de fluide ou de matière supplémentaire et se retire aisément de l'élément après surmoulage. Par conséquent, la solution de l'invention est simple et facile à mettre en oeuvre.

En outre, il est particulièrement adapté pour surmouler un élément tubulaire de grande longueur, puisqu'il conserve de lui-même sensiblement sa forme rectiligne, y compris lorsqu'il n'est tenu que par une extrémité.

Conformément à une première réalisation, l'invention propose que :
- on munisse le dispositif mécanique d'une structure comprenant des fils de renfort, une enveloppe hermétique et de moyens d'alimentation en fluide sous pression de ladite enveloppe,
- lors de l'étape d), on introduise ledit fluide sous pression dans l'enveloppe hermétique.

Cette solution est simple et relativement légère. Sa conception proche de celle d'un pneumatique automobile assure une grande robustesse.

Suivant une deuxième réalisation, l'invention propose que :
- on munisse le dispositif mécanique d'une enveloppe hermétique entourant un arbre et de moyens d'alimentation en fluide sous pression de ladite enveloppe,
- lors de l'étape d), on introduise ledit fluide sous pression dans l'enveloppe hermétique.

Cette solution est simple et relativement facile à mettre en oeuvre. Le fluide est enfermé dans l'enveloppe et peut circuler en circuit fermé à l'intérieur du dispositif.

Selon une troisième réalisation, l'invention propose que :
- on munisse ledit dispositif de moyens annulaires radialement expansibles élastiquement sous l'action d'une contrainte axiale et de moyens pour comprimer axialement les moyens annulaires,
- lors de l'étape d), on comprime axialement les moyens annulaires.

L'obtention d'une contrainte axiale étant relativement simple à obtenir mécaniquement, cette solution est également relativement aisée à mettre en oeuvre.

Suivant une quatrième réalisation, l'invention propose que :
- on munisse le dispositif d'éléments de section circulaire, tels que des sphères ou des cylindres de section circulaire, radialement mobiles, arrangés suivant une disposition annulaire présentant un passage annulaire,
- on munisse le dispositif d'une tige présentant une section supérieure à la section du passage annulaire, lorsque le dispositif est dans son état radialement restreint, et
- lors de l'étape d), l'on engage la tige dans le passage annulaire pour déplacer radialement les éléments circulaires.

L'utilisation d'éléments de section circulaire induit des contacts ponctuels ou linéaires, ce qui réduit les frottements et facilite l'utilisation de ce dispositif.

Par ailleurs, l'invention propose que :
- l'élément tubulaire présente une première et une deuxième ouvertures disposées à chaque extrémité de l'élément tubulaire suivant la direction d'allongement, et
- lors de l'étape c), on introduise un premier dispositif mécanique par la première ouverture par translation suivant ladite direction d'allongement, en le maintenant par son extrémité proximale et un deuxième dispositif mécanique par la deuxième ouverture par translation suivant ladite direction d'allongement, en le maintenant également par son extrémité proximale.

L'utilisation de deux dispositifs mécaniques réduit d'autant la longueur dont il faut déplacer le dispositif suivant la direction d'allongement, ce qui réduit le temps opératoire et augmente la fiabilité.

L'invention concerne en outre un ensemble selon la revendication 7.

En outre, l'invention propose que l'ensemble comprenne en outre :
- des moyens annulaires en élastomère, radialement expansibles élastiquement sous l'action d'une contrainte axiale, présentent une surface extérieure parfaitement cylindrique lorsque le dispositif mécanique est dans son état radialement expansé et légèrement concave lorsque le dispositif mécanique est dans son état radialement restreint, et
- des moyens pour comprimer axialement les moyens annulaires.

Dans la mesure où, il est très difficile d'obtenir des moyens annulaires radialement expansibles qui conservent une forme cylindrique pour des compressions axiales différentes, en privilégiant l'état radialement expansé du dispositif, on obtient un soutien plus efficace de l'élément tubulaire.

En alternative, l'invention propose que l'ensemble comprenne en outre :
- des moyens annulaires radialement expansibles élastiquement sous l'action d'une contrainte axiale, les moyens annulaires comprennent une bague fendue et un manchon présentant radialement une section tronconique, tous deux métalliques, et
- des moyens pour comprimer axialement les moyens annulaires, de sorte que le manchon vienne au contact de la bague, s'insère sous la bague fendue et l'ouvre.

Ainsi, l'ensemble est particulièrement robuste.

L'invention va apparaître encore plus clairement dans la description qui va suivre, faite en référence aux dessins annexés dans lesquels :
- les figures 1 à 3 illustrent trois étapes successives d'un procédé conforme à l'invention,
- la figure 4 illustre à échelle agrandie un premier dispositif mécanique conforme à l'invention dans un état radialement restreint, dans la zone repérée A à la figure 2,
- la figure 5 illustre le dispositif de la figure 4 dans un état radialement expansé,
- la figure 6 illustre à échelle agrandie un deuxième dispositif mécanique conforme à l'invention dans un état radialement restreint, dans la zone repérée A à la figure 2,
- la figure 7 illustre le dispositif de la figure 6 dans un état radialement expansé,
- la figure 8 illustre à échelle agrandie un troisième dispositif mécanique conforme à l'invention dans un état radialement restreint, dans la zone repérée A à la figure 2,
- la figure 9 est une vue suivant la ligne IX-IX de la figure 8,
- la figure 10 illustre le dispositif de la figure 8 dans un état radialement expansé,
- la figure 11 illustre à échelle agrandie un quatrième dispositif mécanique conforme à l'invention en cours d'introduction à l'intérieur d'un élément tubulaire, dans la zone repérée A à la figure 2,
- la figure 12 illustre le quatrième dispositif dans un état essentiellement radialement restreint,
- la figure 13 illustre le quatrième dispositif dans un état radialement expansé,
- la figure 14 illustre à échelle agrandie un cinquième dispositif mécanique conforme à l'invention dans un état radialement restreint, dans la zone repérée A à la figure 2,
- la figure 15 est une vue suivant la ligne XV-XV de la figure 14,
- la figure 16 illustre le dispositif de la figure 14 dans un état radialement expansé.

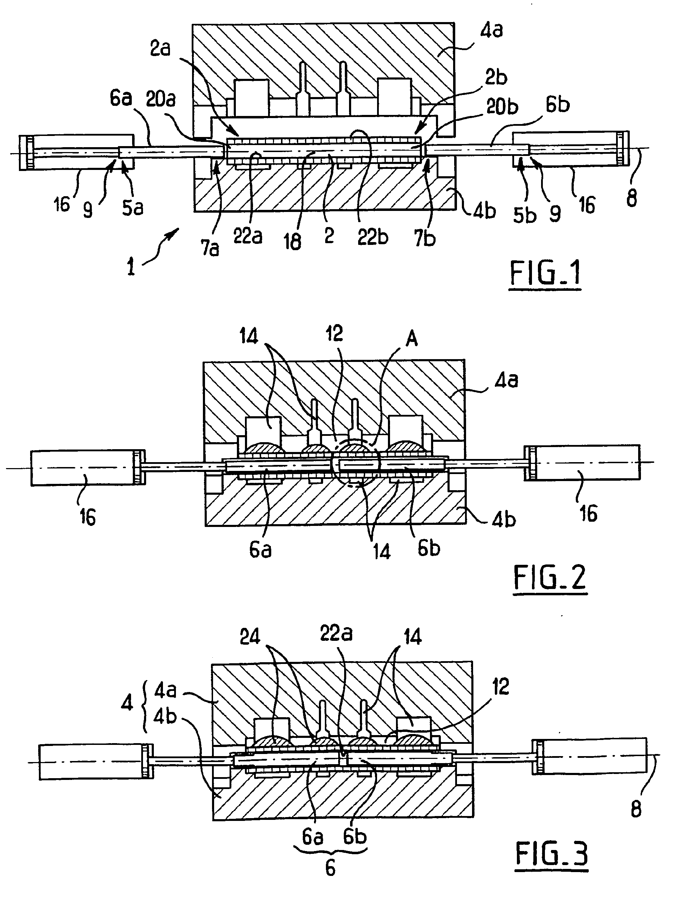

Les figures 1 à 3 illustrent en coupe un ensemble 1 pour surmouler un élément tubulaire 2, constitué ici par une traverse de véhicule à moteur. L'ensemble 1 comprend essentiellement un moule 4 comportant une matrice 4a et un poinçon 4b, et un dispositif mécanique 6 comportant deux parties 6a, 6b, sensiblement identiques.

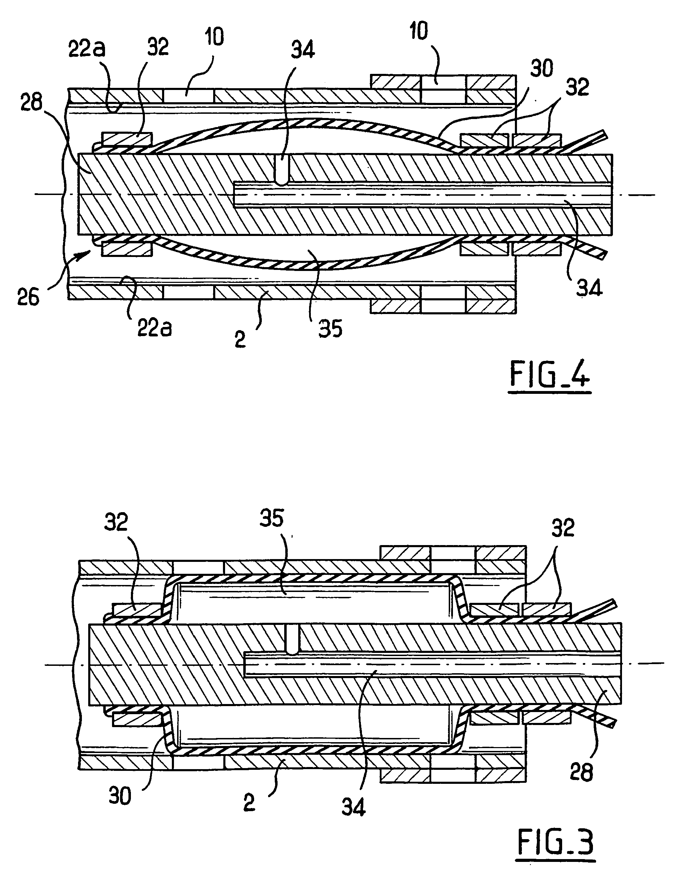

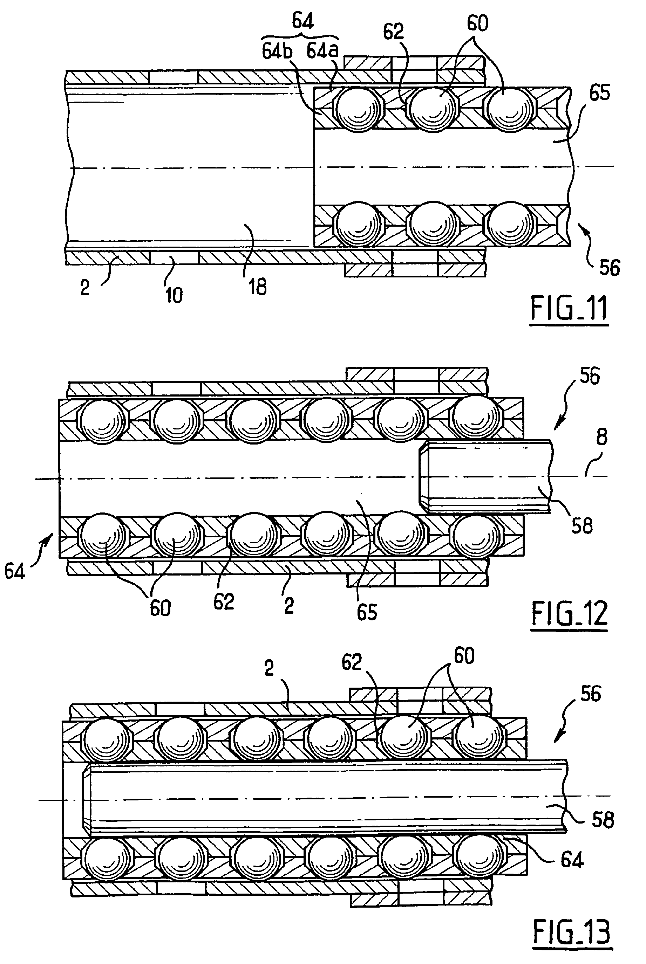

La traverse 2 s'étend suivant une direction d'allongement 8, entre deux extrémités 2a, 2b. Elle présente un passage 18 de section sensiblement constante suivant la direction d'allongement, se terminant à chaque extrémité 2a, 2b par une ouverture 20a, 20b. Le passage 18 est délimité par une surface intérieure 22a. La traverse comprend en outre une surface extérieure 22b. Des trous débouchants 10 s'étendent radialement (voir figures 4 à 13) entre la surface intérieure 22a et la surface extérieure 22b.

Le moule 4 présente une cavité principale 12 destinée à recevoir la traverse 2 et des cavités secondaires 14, communiquant avec la cavité principale 12 et destinées au moulage de supports en matière plastique autour de la traverse 2 et disposées de place en place suivant la direction d'allongement 8. Le moule comprend en outre des cavités fonctionnelles s'étendant entre certaines des cavités secondaires, afin de réaliser des éléments, fonctionnels reliés à la traverse 2 par lesdits supports. Toutefois, ces cavités fonctionnelles s'étendant entre la matrice 4a et le poinçon 4b hors du plan de coupe des figures 1 à 3, elles ne sont pas visibles sur ces figures.

Chaque partie 6a, 6b du dispositif mécanique présente une direction axiale qui est sensiblement confondue avec la direction d'allongement 8 de la traverse 2. Chaque partie 6a, 6b s'étend entre une extrémité proximale respectivement 5a, 5b et une extrémité libre 7a, 7b. Chaque partie 6a, 6b est maintenue en porte-à-faux par son extrémité proximale 5a, 5b sur un vérin respectivement 16a, 16b, par l'intermédiaire de moyens de fixation 9, afin de déplacer la partie correspondante du dispositif suivant la direction d'allongement 8.

Le dispositif 6 présente un état radialement restreint, illustré aux figures 1, 2, 4, 6, 8, 11 et 14, dans lequel il possède une section transversale inférieure à celle de la surface intérieure 22a de la traverse et un état radialement expansé, illustré aux figures 3, 5, 7, 10, 13 et 16, dans lequel il présente une section supérieure ou égale à celle de la surface intérieure 22a de la traverse, afin d'y venir au contact sous pression.

Pour réaliser le surmoulage de la traverse 2, après avoir écarté la matrice 4a et le poinçon 4b, on dispose la traverse 2 dans la cavité principale 12.

Ensuite, on introduit chaque partie 6a, 6b du dispositif mécanique 6 par l'ouverture correspondante 20a, 20b de la traverse par translation suivant la direction axiale 8.

Puis, on introduit de la matière plastique 24 dans les cavités secondaires 14, on place le dispositif 6 dans son état radialement expansé et on répartit la matière plastique dans les cavités secondaires 14, par compression, en fermant le moule par rapprochement de la matrice 4a et du poinçon 4b.

L'ordre dans lequel on introduit la matière plastique 24 dans les cavités secondaires 14, on commence à fermer le moule 4 et on place le dispositif mécanique 6 dans son état radialement expansé importe relativement peu, dans la mesure où l'on place le dispositif mécanique 6 dans son état radialement expansé avant que la matière plastique n'exerce une pression très élevée sur la traverse 2, du fait de la compression exercée par la fermeture du moule 4.

Par simplification, il apparaît sur les figures 1 à 3 que la matière plastique 24 a été introduite dans les cavités secondaires 24, à proximité de la traverse 2. Toutefois, l'invention s'applique également au cas où la matière plastique est introduite partiellement ou totalement à l'écart de la traverse 2 et en particulier dans les cavités fonctionnelles précitées, et n'arrive au contact de cette traverse que lorsque le moule 4 est presque entièrement fermé.

Lorsque le moule 4 est entièrement fermé, la matrice 4a étant au contact du poinçon 4b, après refroidissement de la matière plastique, on place le dispositif mécanique 6 dans son état radialement restreint, on sort le dispositif mécanique 6 du passage 18 à l'aide des vérins 16, puis on ouvre le moule 4 et on retire la pièce finie avec les supports en matière plastique surmoulés sur la traverse 2.

Ce procédé s'applique en particulier au cas de matière plastique chargé de fibres, telle qu'un thermoplastique renforcé estampable (TRE).

Les figures 4 et 5 illustrent un dispositif mécanique 26 comprenant un arbre 28 autour duquel est maintenue une membrane hermétique 30 par l'intermédiaire d'anneaux 32. L'arbre 28 renferme un conduit d'alimentation 34 en fluide sous pression débouchant dans un volume 35 situé entre la membrane 30 et l'arbre 28.

Lorsque le conduit 34 est alimenté en fluide sous la membrane 30, celle-ci, en matériau élastomère, s'expanse radialement et vient sous pression au contact de la surface intérieure 22a de la traverse 2. La présence des trous 10 ne constitue pas un problème pour utiliser le dispositif mécanique, du fait de la présence de la membrane 30.

Lorsque la pression dans le conduit d'alimentation 34 est annulée, par retour élastique de la membrane, le dispositif mécanique 26 reprend son état radialement restreint de section inférieure à celle de la surface intérieure 22a.

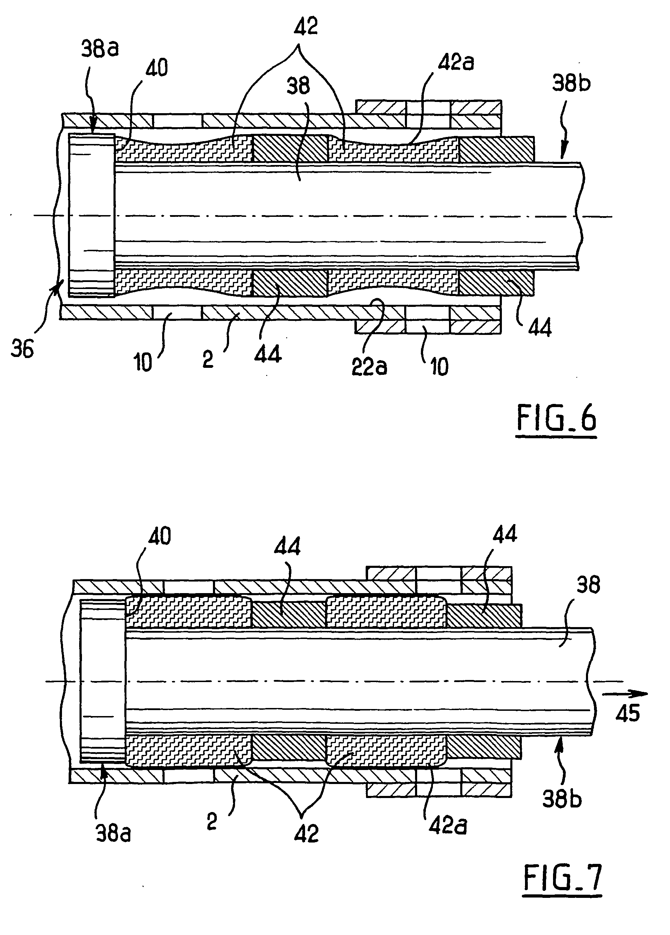

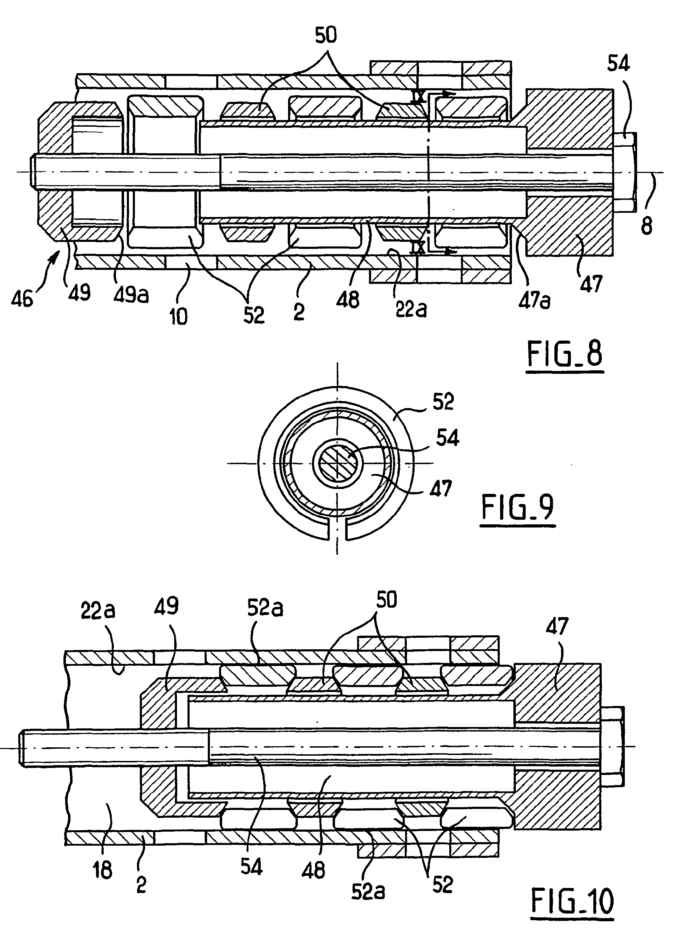

Les figures 7 et 8 illustrent un dispositif mécanique 36 comprenant des éléments annulaires 42 élastiquement déformables engagés autour d'un arbre 38 présentant une première 38a et une deuxième 38b extrémités. L'arbre 38 est muni à la première extrémité 38a d'un épaulement 40. Les éléments annulaires 42 sont séparés les uns des autres par des entretoises 44. Tel qu'illustré à la figure 6, en l'absence de contrainte exercée sur les éléments annulaires 42, ceux-ci présentent un diamètre intérieur sensiblement égale au diamètre extérieur de l'arbre et une surface extérieure 42a concave.

Pour placer le dispositif mécanique 36 dans son état radialement expansé, tel qu'illustré par la flèche 45, on exerce un effort de traction à la deuxième extrémité 38b de l'arbre 38, de sorte que les éléments annulaires 42 sont axialement comprimés entre les entretoises 44 et l'épaulement 40. Sous l'effet de la contrainte axiale résultant de l'effort de traction exercé sur l'arbre 38, les éléments annulaires 42 s'expansent radialement.

Afin d'obtenir une répartition relativement uniforme de la pression exercée par les éléments annulaires 42 sur la surface intérieure 22a de la traverse 2, la surface des éléments annulaires destinée à venir au contact de la surface intérieure 22a de la traverse sera usinée à la forme cylindrique désirée, ici de section circulaire, après avoir placé le dispositif dans son état radialement expansé.

De préférence, les éléments annulaires 42 sont réalisés en matériau thermoplastique élastomère, en particulier en élastomère polyuréthane, tel que de l'ELADIP (dénomination commersiale).

Les figures 8 à 10 illustrent un dispositif mécanique 46 comprenant un fourreau 48 autour duquel sont disposés des manchons métalliques 50 de section transversale tronconique et des bagues métalliques fendues 52 de section transversale complémentaire se succédant alternativement.

Le fourreau 48 comprend une tête 47 et est relié à un embout taraudé 49 par l'intermédiaire d'une vis 54. La tête 47 et l'embout 49 présentent chacun une surface biseautée 47a, 49a venant au contact d'une bague fendue 52.

En vissant la vis 54, on exerce un effort suivant la direction axiale 8 entre les manchons 50 et les bagues fendues 52. Tel qu'illustré à la figure 10, du fait des formes précitées des bagues fendues et des manchons, les manchons 50 tendent à passer sous les bagues fendues 52 et à les ouvrir. Les bagues fendues passent ainsi d'une section inférieure à celle du passage 18, à une section sensiblement égale, de sorte les bagues fendues 52 viennent exercer une pression par l'intermédiaire de leur surface extérieure 52a sur la surface intérieure 22a de la traverse.

En dévissant la vis 54, les bagues fendues 52 reviennent élastiquement de leur état radialement expansé à un état radialement restreint.

Les figurent 11 à 13 illustrent un dispositif mécanique 56 comprenant une tige 58, des éléments de section circulaires, ici des sphères 60, maintenus à l'intérieur de logements 62 ménagés dans une cage tubulaire 64 présentant un passage intérieur 65. Les sphères 60 sont ainsi disposés de façon annulaire. La cage 64 comprend deux éléments tubulaires 64a, 64b fixés l'un à l'autre. Les sphères 60 présentent une légère liberté de déplacement perpendiculaire à la direction axiale 8, à l'intérieur des logements 62.

Ainsi, on peut aisément insérer la cage 64 portant les sphères 60 dans le passage 18 ménagé dans la traverse en passant par les ouvertures 20a, 20b. Ensuite, on insère la tige 58 dans le passage intérieur 65. La section de la tige 68 est telle qu'elle contraint les sphères 60 à se déplacer radialement et à exercer une pression sur la surface intérieure 22a de la traverse.

Du fait des contacts quasi-ponctuels entre les sphères 60 et la tige 58 et de la forme des sphères 60, la tige 58 peut déplacer par rapport aux sphères par roulement. L'introduction et le retrait de la tige 58 à l'intérieur du passage intérieur 65 ne nécessite donc qu'un effort modéré rapporté à pression exercée par les sphères 60 sur la surface intérieure 22a de la traverse 2.

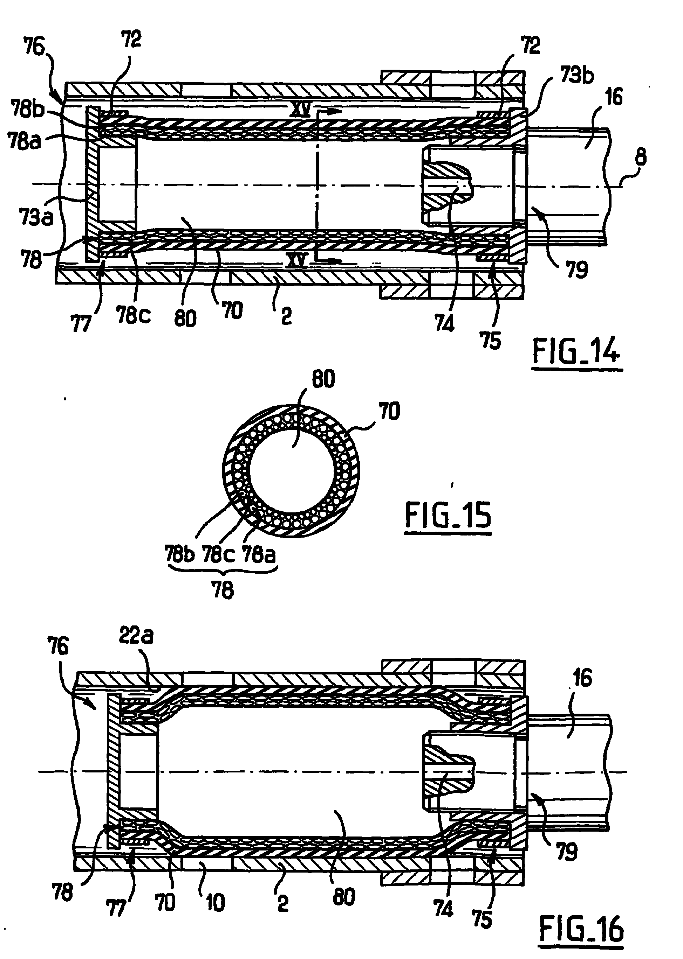

Les figures 14 à 16 illustrent un dispositif mécanique 76 comprenant une structure tubulaire 78 s'étendant entre une extrémité proximale 75 et une extrémité distale 77 suivant une direction axiale 8, maintenue à chaque extrémité sur un embout 73a, 73b et protégée par une gaine de protection 70. Pour éviter que la structure 78 se libère des embouts 73a, 73b, le dispositif mécanique 76 comprend en outre une bague de maintien 72 à chaque extrémité.

La structure 78 comprend des fils métalliques de renfort 78a, 78b enroulés en hélice et noyés dans un manchon plastique 78c. De premiers fils métalliques de diamètre relativement fin constituent un premier enroulement 78a et de seconds fils métalliques de diamètre relativement plus gros constituent un deuxième enroulement 78b recouvrant le premier enroulement 78a. Le manchon plastique 78c relativement rigide et robuste assure le maintien des fils métalliques et l'étanchéité de la structure 78.

Ainsi, la structure 78 est hermétique et autoportante. La gaine 70 protège la structure 78 des imperfections que présente la surface intérieure 22a de la traverse, tel que des bavures ou des trous 10. Elle peut notamment être constituée par une couche de caoutchouc, d'élastomère ou par un matériau tissé métallique.

Le dispositif mécanique 76 est maintenu sur la tige du vérin 16 uniquement par son extrémité proximale 75 (l'extrémité distale 77 étant libre) et par l'intermédiaire de moyens de fixation 79. Ces moyens de fixations sont constitués ici par un taraudage réalisé dans le manchon 73b coopérant avec un filetage réalisé sur la tige du vérin 16. Tout autre moyen de fixation analogue ou tout autre moyen de bridage conviendrait également.

La structure 78 étant autoportante, bien que maintenue en porte-à-faux par sa seule extrémité proximale 75, le dispositif mécanique 76 se maintient rectiligne suivant la direction axiale 8.

Le dispositif mécanique 76 comprend en outre un conduit d'alimentation en fluide sous pression débouchant dans un volume 80 s'étendant à l'intérieur de la structure 78.

Lorsque le conduit 74 est alimenté en fluide sous haute pression (environ 200 bar), la structure hermétique 78 et la gaine de protection 70 s'expansent radialement et viennent sous pression au contact de la surface intérieure 22a de la traverse 2. Du fait de la rigidité de la structure 78, les trous 10 n'altèrent pas l'efficacité du dispositif mécanique 76.

Lorsque la pression décroît dans le conduit d'alimentation 74, par retour élastique, la structure hermétique 78 et la gaine de protection 70 reviennent dans leur état radialement restreint de section inférieure à la surface intérieure 22a.

Bien entendu, l'invention n'est nullement limitée à la réalisation qui vient d'être décrite à titre d'exemple non limitatif. Ainsi, au lieu d'être de section circulaire, le passage 18 pourrait être rectangulaire, ou même quelconque. On pourrait alors prévoir des éléments de section circulaire qui ne soient pas sphériques, tels par exemple que des rouleaux.

## Revendications

1. Procédé pour surmouler, par compression de matière plastique, au moins une partie d'un élément tubulaire (2) présentant une surface intérieure (22a) et s'étendant suivant une direction d'allongement (8) avec un rapport d'allongement supérieur à 10, le procédé étant exécuté dans un moule ayant une cavité principale destinée à loger l'élément tubulaire et des cavités secondaires communiquant avec la cavité principale destinées au moulage de supports en matière plastique autour de l'élément tubulaire et disposées de place en place suivant la direction d'allongement, le procédé comprenant les étapes suivantes:
a) disposer l'élément tubulaire et la matière plastique à l'intérieur du moule, cette étape comprenant l'exécution, à l'aide d'un dispositif mécanique (6, 26, 36, 46, 56, 76) s'étendant entre une extrémité proximale (5a, 5b, 75) et une extrémité libre (7a, 7b, 77), présentant un état radialement restreint et un état radialement expansé, et ayant une rigidité telle qu'il s'étend dans son état radialement restreint suivant une direction axiale (8) sensiblement rectiligne et conserve de lui-même cette forme, les opérations suivantes:
b) placer le dispositif mécanique dans son état radialement restreint, dans lequel il présente une section inférieure à celle de la surface intérieure de l'élément tubulaire,
c) maintenir le dispositif mécanique par son extrémité proximale et introduire le dispositif mécanique à l'intérieur de l'élément tubulaire par translation suivant ladite direction d'allongement, et
d) amener le dispositif mécanique, dans son état radialement expansé, au contact sous pression de la surface intérieure de ladite partie de l'élément tubulaire, puis
e) fermer ledit moule pour comprimer la matière plastique dans les cavités secondaires au moins.

2. Procédé selon la revendication 1, **caractérisé en ce que** :
- on munit le dispositif mécanique d'une structure comprenant des fils de renfort (78a, 78b), une enveloppe hermétique (78c, 70) élastiquement déformable et des moyens d'alimentation (74) en fluide sous pression de ladite enveloppe,
- lors de l'étape d), on introduit ledit fluide sous pression dans l'enveloppe hermétique.

3. Procédé selon la revendication 1, **caractérisé en ce que**:
- on munit le dispositif mécanique d'une enveloppe hermétique (30) entourant un arbre (28) et de moyens d'alimentation (34) en fluide sous pression de ladite enveloppe,
- lors de l'étape d), on introduit ledit fluide sous pression dans l'enveloppe hermétique.

4. Procédé selon la revendication 1, **caractérisé en ce que**:
- on munit ledit dispositif de moyens annulaires (42 ; 50, 52) radialement expansibles élastiquement sous l'action d'une contrainte axiale et de moyens (38, 40, 44 ; 47, 48, 49, 54) pour comprimer axialement les moyens annulaires,
- lors de l'étape d), on comprime axialement les moyens annulaires.

5. Procédé selon la revendication 1, **caractérisé en ce que**:
- on munit le dispositif d'éléments (60) de section circulaire, radialement mobiles, arrangés suivant une disposition annulaire présentant un passage annulaire (65),
- on munit le dispositif d'une tige (58) présentant une section supérieure à la section du passage annulaire, et
- lors de l'étape d), on engage la tige dans le passage annulaire pour déplacer radialement les éléments circulaires.

6. Procédé selon l'une quelconque des revendications précédentes, **caractérisé en ce que**:
- l'élément tubulaire présente une première (20a) et une deuxième (20b) ouvertures disposées à chaque extrémité (2a, 2b) de l'élément tubulaire suivant la direction d'allongement, et
- lors de l'étape c), on introduit un premier dispositif mécanique (6a) par la première ouverture (20a) par translation suivant ladite direction d'allongement, en le maintenant par son extrémité proximale (5a) et un deuxième dispositif mécanique (6b) par la deuxième ouverture (20b) par translation suivant ladite direction d'allongement, en le maintenant également par son extrémité proximale (5b).

7. Ensemble pour surmouler, par compression de matière plastique, au moins une partie d'un élément tubulaire (2) présentant une surface intérieure (22a) et s'étendant suivant une direction d'allongement (8) avec un rapport d'allongement supérieur à 10, ledit ensemble comprenant un moule (4) et un dispositif mécanique (6, 26, 36, 46, 56, 76) s'étendant entre une extrémité proximale (5a, 5b, 75) et une extrémité libre (7a, 7b, 77) et ayant un état radialement restreint et un état radialement expansé, ledit dispositif présentant dans son état radialement restreint une section inférieure à celle de la surface intérieure de l'élément tubulaire et dans son état radialement expansé une section supérieure ou égale à celle de la surface intérieure de ladite partie de l'élément tubulaire, **caractérisé en ce que**:
- le moule (4) a une cavité principale destinée à loger l'élément tubulaire (2) et des cavités secondaires communiquant avec la cavité principale destinées au moulage de supports en matière plastique autour de l'élément tubulaire et disposées de place en place suivant la direction d'allongement,
- le dispositif mécanique présente une rigidité telle qu'il s'étend suivant une direction axiale (8) sensiblement rectiligne entre ladite extrémité proximale et ladite extrémité libre, et conserve de lui cette forme, et
- l'ensemble comprend des moyens (16) pour déplacer le dispositif mécanique suivant ladite direction d'allongement (8), lesdits moyens maintenant le dispositif mécanique uniquement par son extrémité proximale (5a, 5b, 75).

8. Ensemble selon la revendication 7, **caractérisé en ce que** le dispositif comprend une structure formée par des fils de renfort (78a, 78b), une enveloppe hermétique (78c, 70) et des moyens (74) d'alimentation en fluide sous pression de ladite enveloppe.

9. Ensemble selon la revendication 7, **caractérisé en ce que** le dispositif comprend un arbre (28), une enveloppe hermétique (30) et des moyens (34) d'alimentation en fluide sous pression de ladite enveloppe.

10. Ensemble selon la revendication 7, **caractérisé en ce que** le dispositif comprend:
- des moyens annulaires (42 ; 50, 52) radialement expansibles élastiquement sous l'action dune contrainte axiale, et
- des moyens (38, 40, 44 ; 47, 48, 49, 54) pour comprimer axialement les moyens annulaires.

11. Ensemble selon la revendication 10, **caractérisé en ce que** les moyens annulaires (42) sont en élastomère et présentent une surface extérieure (42a) parfaitement cylindrique lorsque le dispositif mécanique est dans son état radialement expansé et légèrement concave lorsque le dispositif mécanique est dans son état radialement restreint.

12. Ensemble selon la revendication 10, **caractérisé en ce que** les moyens annulaires comprennent une bague fendue (52) et un manchon (50) tous deux métalliques, ledit manchon présentant radialement une section tronconique, de sorte que sous l'action des moyens (47, 48, 49, 54) pour comprimer axialement les moyens annulaires, le manchon vient au contact de la bague, s'insère sous la bague fendue et l'ouvre.

13. Ensemble selon la revendication 7, **caractérisé en ce que** le dispositif comprend en outre:
- des éléments circulaires (60), radialement mobiles, arrangés suivant une disposition annulaire (64) présentant un passage annulaire (65), et
- une tige (58), s'engageant dans le passage annulaire pour déplacer radialement les éléments circulaires.

14. Ensemble selon la revendication 13, **caractérisé en ce que** les éléments circulaires sont définis par des sphères (60) ou des rouleaux maintenus les uns par rapport aux autres par une cage tubulaire (64).

## Claims

1. Method for over-moulding, by compression of plastics material, at least a portion of a tubular element (2) which has an inner surface (22a) and which extends in an extension direction (8) with an extension ratio greater than 10, the method being carried out in a mould having a main cavity which is intended to receive the tubular element and secondary cavities which communicate with the main cavity and which are intended for moulding supports of plastics material around the tubular element and which are arranged at various locations in the extension direction, the method comprising the following steps:
a) positioning the tubular element and the plastics material inside the mould, this step involving carrying out, using a mechanical device (6, 26, 36, 46, 56, 76) which extends between a proximal end (5a, 5b, 75) and a free end (7a, 7b, 77) and which has a radially restricted state and a radially expanded state, and which has a rigidity such that it extends in the radially restricted state thereof in a substantially rectilinear axial direction (8) and keeps this shape of itself, the following operations:
b) positioning the mechanical device in the radially restricted state thereof, in which it has a cross-section smaller than that of the inner surface of the tubular element,
c) securing the mechanical device at the proximal end thereof and introducing the mechanical device inside the tubular element by translation in the extension direction, and
d) bringing the mechanical device, in the radially expanded state thereof, into contact, under pressure, with the inner surface of the portion of the tubular element, then
e) closing the mould in order to compress the plastics material in the secondary nests at least.

2. Method according to claim 1, **characterised in that**:
- the mechanical device is provided with a structure comprising reinforcing strands (78a, 78b), a resiliently deformable hermetic casing (78c, 70) and means (74) for supplying the casing with pressurised fluid,
- during step d), the pressurised fluid is introduced into the hermetic casing.

3. Method according to claim 1, **characterised in that**:
- the mechanical device is provided with a hermetic casing (30) which surrounds a shaft (28) and means (34) for supplying the casing with pressurised fluid,
- during step d), the pressurised fluid is introduced into the hermetic casing.

4. Method according to claim 1, **characterised in that**:
- the device is provided with annular means (42; 50, 52) which are radially expansible resiliently under the action of an axial stress and means (38, 40, 44; 47, 48, 49, 54) for axially compressing the annular means,
- during step d), the annular means are axially compressed.

5. Method according to claim 1, **characterised in that**:
- the device is provided with radially movable elements (60) which have a circular cross-section and which are arranged in an annular arrangement having an annular passage (65),
- the device is provided with a rod (58) having a cross-section greater than the cross-section of the annular passage and,
- during step d), the rod is engaged in the annular passage in order to displace the circular elements radially.

6. Method according to any one of the preceding claims,
**characterised in that**:
- the tubular element has a first opening (20a) and a second opening (20b) which are arranged at each end (2a, 2b) of the tubular element in the extension direction and,
- during step c), a first mechanical device (6a) is introduced through the first opening (20a) by translation in the extension direction, with the device being secured at the proximal end (5a) thereof, and a second mechanical device (6b) is introduced through the second opening (20b) by translation in the extension direction, with the device also being secured at the proximal end (5b) thereof.

7. Assembly for over-moulding, by compression of plastics material, at least a portion of a tubular element (2) which has an inner surface (22a) and which extends in an extension direction (8) with an extension ratio greater than 10, the assembly comprising a mould (4) and a mechanical device (6, 26, 36, 46, 56, 76) which extends between a proximal end (5a, 5b, 75) and a free end (7a, 7b, 77) and which has a radially restricted state and a radially expanded state, the device having, in the radially restricted state thereof, a cross-section smaller than that of the inner surface of the tubular element and, in the radially expanded state thereof, a cross-section greater than or equal to that of the inner surface of the portion of the tubular element, **characterised in that**:
- the mould (4) has a main cavity which is intended to receive the tubular element (2) and secondary cavities which communicate with the main cavity and which are intended for moulding supports of plastics material around the tubular element and which are arranged at various locations in the extension direction,
- the mechanical device has a rigidity such that it extends in a substantially rectilinear axial direction (8) between the proximal end and the free end and keeps this shape of itself, and
- the assembly comprises means (16) for displacing the mechanical device in the extension direction (8), the means securing the mechanical device only at the proximal end (5a, 5b, 75) thereof.

8. Assembly according to claim 7, **characterised in that** the device comprises a structure formed by reinforcing strands (78a, 78b), a hermetic casing (78c, 70) and means (74) for supplying the casing with pressurised fluid.

9. Assembly according to claim 7, **characterised in that** the device comprises a shaft (28), a hermetic casing (30) and means (34) for supplying the casing with pressurised fluid.

10. Assembly according to claim 7, **characterised in that** the device comprises:
- annular means (42; 50, 52) which are radially expansible resiliently under the action of an axial stress, and
- means (38, 40, 44; 47, 48, 49, 54) for axially compressing the annular means.

11. Assembly according to claim 10, **characterised in that** the annular means (42) are of elastomer material and have an outer surface (42a) which is completely cylindrical when the mechanical device is in the radially expanded state thereof and slightly concave when the mechanical device is in the radially restricted state thereof.

12. Assembly according to claim 10, **characterised in that** the annular means comprise a split ring (52) and a sleeve (50) which are both of metal, the sleeve having radially a frustoconical cross-section so that, under the action of the means (47, 48, 49, 54) for axially compressing the annular means, the sleeve comes into contact with the ring, is inserted under the split ring and opens it.

13. Assembly according to claim 7, **characterised in that** the device further comprises:
- radially movable circular elements (60), which are arranged in an annular arrangement (64) having an annular passage (65),
and
- a rod (58) which engages in the annular passage in order to displace the circular elements radially.

14. Assembly according to claim 13, **characterised in that** the circular elements are defined by spheres (60) or rollers which are secured relative to each other by a tubular cage (64).

## Patentansprüche

1. Verfahren zum Überziehen zumindest eines Teils eines rohrförmigen Elements (2) mittels eines Kunststoff-Pressformverfahrens, welches Teil eine innere Oberfläche (22a) aufweist und sich in einer Dehnungsrichtung (8) mit einem Dehnungsverhältnis größer als 10 erstreckt, welches Verfahren in einer Form mit einem ersten Haupthohlraum durchgeführt wird, der zur Aufnahme des rohrförmigen Elements vorgesehen ist, sowie mit Sekundärhohlräumen, die mit dem Haupthohlraum in Verbindung stehen und zur Formung von Lagerstellen aus Kunststoffmasse um das rohrförmige Element vorgesehen sind und stellenweise entlang der Dehnungsrichtung angeordnet sind, welches Verfahren die folgenden Schritte umfaßt:
a) Anordnung des rohrförmigen Elements und der Kunststoffmasse im Inneren der Form, welcher mit Hilfe einer mechanischen Einrichtung (6,26,36,46,56,76), die sich zwischen einem nahen Ende (5a,5b,75) und einem freien Ende (7a,7b,77) erstreckt und einen radial eingezogenen und einen radial ausgedehnten Zustand aufweist und eine solche Steifigkeit aufweist, dass sie sich in ihrem radial eingezogenen Zustand in einer axialen Richtung (8) im wesentlichen geradlinig erstreckt und diese Form beibehält, die Ausführung der folgenden Schritte umfaßt
b) Anordnung der mechanischen Einrichtung in ihrem radial eingezogenen Zustand, in welchem sie einen Querschnitt aufweist, der kleiner ist als derjenige der inneren Oberfläche des rohrförmigen Elements.
c) Halten der mechanischen Einrichtung an ihrem nahen Ende und Einfähren der mechanischen Einrichtung in das Innere des rohrförmigen Elements durch eine Translation entlang der Dehnungsrichtung, und
d) Bringen der mechanischen Einrichtung in ihrem radial ausgedehnten Zustand in Berührung unter Druck an die innere Oberfläche des Teils des rohrförmigen Element und anschließend
e) Schließen der Form zum Komprimieren der Kunststoffmasse zumindest in den Sekundärhohräumen.

2. Verfahren gemäß Anspruch 1, **dadurch gekennzeichnet, dass** man die mechanische Einrichtung mit einer Struktur mit Verstärkungsstreben (78a,78b), einer geschlossenen Hülle (78c,70), die elastisch verformbar ist, und Mitteln zur Einführung (74) eines Fluids unter Druck in die Hülle ausstattet, und dass man in Schritt d) das Fluid unter Druck in die geschlossene Hülle einleitet.

3. Verfahren gemäß Anspruch 1, **dadurch gekennzeichnet.**
- **dass** man die mechanische Einrichtung mit einer geschlossenen Hülle (30) ausstattet, die eine Welle (28) umschließt, sowie mit Versorgungsmitreln (34) zum Einleiten eines Fluids unter Druck in die Hülle,
- und **dass** man in Schritt d) das Fluid unter Druck in die geschlossene Hülle einleitet.

4. Verfahren gemäß Anspruch 1, **dadurch gekennzeichnet,**
- **dass** man die Einrichtung mit ringförmigen Mitteln (42,50,52) ausstattet, die radial elastisch unter Wirkung einer axialen Kontraktion ausdehnbar sind, sowie mit Mitteln (38,40,44,47,48,49,54) zum axialen Komprimieren der ringförmigen Mittel.
- und dass in Schritt d) die ringförmigen Mittel komprimiert werden.

5. Verfahren gemäß Anspruch 1, **dadurch gekennzeichnet,**
- **dass** man die Einrichtung mit Elementen (60) mit kreisförmigem Querschnitt ausstattet, die radial beweglich sind und entlang einer ringförmigen Einrichtung angeordnet sind, die einen ringförmigen Kanal (65) aufweist,
- und **dass** man die Einrichtung mit einem Schaft (58) ausstattet, der einen Querschnitt aufweist, der größer ist als der Querschnitt des ringförmigen Kanals,
- und **dass** man in Schritt d) den Schaft in den ringförmigen Kanal zur radialen Verschiebung der kreisförmigen Elemente einführt.

6. Verfahren gemäß einem der vorhergehenden Ansprüche, **dadurch gekennzeichnet,**
- **dass** das rohrformige Element eine erste (20a) und eine zweite Öffnung (20b) au weist, die an jedem Ende (2a,2b) des rohrförmigen Elements bezüglich der Dehnungsrichtung angeordnet sind.
- und **dass** im Schritt c) eine erste mechanische Einrichtung (6a) durch die erste Öffnung (20a) .durch Translation entlang der Dehnungsrichtung einführt, während sie an ihrem nahen Ende (5a) festgehalten wird, und eine zweite mechanische Einrichtung (6b) durch die zweite Öffnung (20b) durch Translation in der Dehnungsrichtung einführt, während sie ebenfalls an ihrem nahen Ende (5b) gehalten wird.

7. Vorrichtung zum Überziehen zumindest eines Teils eines rohrförmigen Elements (2) mittels eines Kunstsroff-Pressformverfahrens, welches rohrförmige Element (2) eine Innere Oberfläche (22a) aufweist und sich in einer Dehnungsrichtung (8) mit einem Dehnungsverhältnis größer als 10 erstreckt, welche Vorrichtung eine Form (4) und eine mechanische Einrichtung (6,26,36,45,56,76) umfaßt, die sich zwischen einem nahen Ende (5a,5b,75) und einem freien. Ende (7a,7b,77) erstreckt und einen radial zusammengezogenen und einen radial ausgedehnten Zustand aufweist, welche Einrichtung in ihrem radial zusammengezogenen Zustand einen kleineren Querschnitt aufweist als derjenige der inneren Oberfläche des rohrförmigen Elements und in ihrem radial ausgedehnten Zustand einen Querschnitt, der größer oder gleich demjenigen der inneren Oberfläche des Teils des rohrförmigen Elements ist, **dadurch gekennzeichnet.**
- **dass** die Form (4) einen Haupthohlraum, aufweist, der zur Aufnahme des rohrförmigen Elements (2) vorgesehen ist, und Sekundärhohlräume, die mit dem Haupthohlraum kommunizieren und zum Formen von Stützelementen aus kunststoffmasse um das rohrförmige Element herum vorgesehen sind, welche stellenweise entlang der Dehnungsrichtung angeordnet sind,
- **dass** die mechanische Einrichtung eine solche Steifigkeit, aufweist, dass sie sich in einer Axialrichtung (8) im wesentlichen gradlinig zwischen ihrem nahen Ende und ihrem freien Ende erstreckt und diese Form beibehält.
- und **dass** die Vorrichtung Mittel (16) zum Verschieben der mechanischen Einrichtung in der Dehnungsrichtung (8) umfaßt, welche Mittel die mechanische Einrichtung ausschließlich an ihrem nahen Ende (5a,5b,75) aufnehmen.

8. Vorrichtung gemäß Anspruch 7, **dadurch gekennzeichnet, dass** die Einrichtung eine Struktur umfaßt, die durch Verstärkungsstreben (78a,78b) gebildet wird, sowie durch eine geschlossene Hülle (78c,70) und durch Mittel (74) zur Einleitung von Fluid unter Druck in die Hülle.

9. Vorrichtung gemäß Anspruch 7, **dadurch gekennzeichnet, dass** die Einrichtung eine Welle (28), eine geschlossene Hülle (30) und Mittel (34) zur Einleitung von Fluid unter Druck in die Hülle umfaßt.

10. Vorrichtung gemäß Anspruch 7, **dadurch gekennzeichnet, dass** die Einrichtung umfaßt,
- ringförmige Mittel (42,50,52), die radial elastisch unter der Wirkung einer axialen Zusammenziehung ausdehnbar sind.
- und Mittel (38,40,44,47,48,49,54) zum axialen Komprimieren der ringförmigen Mittel.

11. Vorrichtung gemaß Anspruch 10, **dadurch gekennzeichnet, dass** die ringförmigen Mittel (42) aus einem Elastomer bestehen und eine äußere Oberfläche (42a) aufweisen, die vollständig zylindrisch ist, wenn die mechanische Einrichtung sich in ihrem radial ausgedehnten Zustand befindet, und leicht konkav ist, wenn die mechanische Einrichtung sich in ihrem radial zusammengezogenen Zustand befindet.

12. Vorrichtung gemäß anspruch 10, **dadurch gekennzeichnet, dass** die ringförmigen Mittel einen geschlitzten Ring (52) und eine Muffe (50) umfassen, die beide metallisch sind, welche Muffe radial einen kegelstumpfförmigen Querschnitt aufweist, derart, dass durch Wirkung der Mittel (47,48,49,54) zur axialen Komprimierung der ringförmigen Mittel die Muffe in Berührung mit dem Ring gerät und sich in den geschlitzten Ring eindrückt und diesen öffnet.

13. Vorrichtung gemäß Anspruch 7, **dadurch gekennzeichnet, dass** die Einrichtung ferner umfaßt:
- runde Elemente (60), die radial beweglich entlang einer ringförmigen Einrichtung (64) angeordnet sind, die einen ringförmigen Kanal (65) aufweist,
- und einen Schafft (58), der sich in den ringförmigen Kanal zur radialen Verschiebung der runden Elemente erstreckt.

14. Vorrichtung gemäß Anspruch 13, **dadurch gekennzeichnet, dass** die runden Elemente durch Kugeln (60) oder Rollen gebildet werden, die voneinander durch einen rohrförmigen Käfig (64) getrennt gehalten werden.
